# EUROPÄISCHE PATENTSCHRIFT

(11) **EP 0 612 651 B1**
(45) Veröffentlichungstag und Bekanntmachung des Hinweises auf die Patenterteilung: **09.11.1994**
(21) Anmeldenummer: 93103110.8
(22) Anmeldetag: 26.02.1993
(51) Int. Cl.: B62D 5/04, B62D 7/15

(54) **Stellantrieb mit einem Axialgetriebe, insbesondere zum Lenken eines vier lenkbare Räder aufweisenden Fahrzeugs**
Actuator with axial transmission especially for steering a vehicle with four steerable wheels
Servomoteur avec une transmission axiale notamment pour diriger un véhicule à quatre roues directrices

(43) Veröffentlichungstag der Anmeldung: 31.08.1994
(73) Patentinhaber: SIEMENS AKTIENGESELLSCHAFT, 80333 München (DE)
(72) Erfinder: Bauer, Jürgen, W-8700 Würzburg (DE)

(56) Entgegenhaltungen:
- EP-A- 0 124 418
- DE-C- 3 735 517
- GB-A- 2 186 245

## Beschreibung

Die Erfindung bezieht sich auf einen Stellantrieb mit einem Axialgetriebe, insbesondere zum Lenken eines vier lenkbare Räder aufweisenden Fahrzeugs gemäß Oberbegriff des Anspruchs 1; ein derartiger Stellantrieb ist durch die DE-C2-37 35 517 bekannt.

Bei dem vorgenannten bekannten Stellantrieb ist die eine konzentrische Spurstange antreibende Spindelmutter in einem ersten Gehäuseabschnitt axial einem antreibenden Elektromotor in einem mit dem ersten Gehäuseabschnitt verschraubten zweiten Gehäuseabschnitt vorgelagert. Die Spindelmutter ist über wenigstens ein unter Vorspannung stehendes elastisch nachgiebiges Glied in dem ersten Gehäuseabschnitt gelagert; vorzugsweise ist dazu jedes Ende der Spindelmutter über Schrägkugellager unter Zwischenlage von Gummiteilen gegen den ersten Gehäuseabschnitt axial abgestützt. Als antreibender Elektromotor ist ein Dauermagnetmotor mit statorseitigen Magneten und einem bewickelten Rotorpaket vorgesehen, dessen Wicklung über einen rotorseitigen Kommutator und diesen beschleifende,statorseitig gehaltene Bürsten gespeist wird. Rotorpaket und Kommutator sind auf einer Hohlwelle befestigt, die drehbar konzentrisch zur Spurstange angeordnet und über ein axial vorgelagertes Getriebe mit der Spindelmutter in Mitnahmeverbindung steht. Als Lenkwinkeldetektor bzw. als Verstellweg-Erfassung der Spurstange ist eine Spulenanordnung mit einer statorseitigen inneren Primärspule und einer konzentrischen äußeren Sekundärspule sowie der Spulenanordnung zugeordnetem, mit der Spurstange verbundenen Metallring derart vorgesehen, daß die Spulenanordnung und der Metallring einen Differentialtransformator bilden.

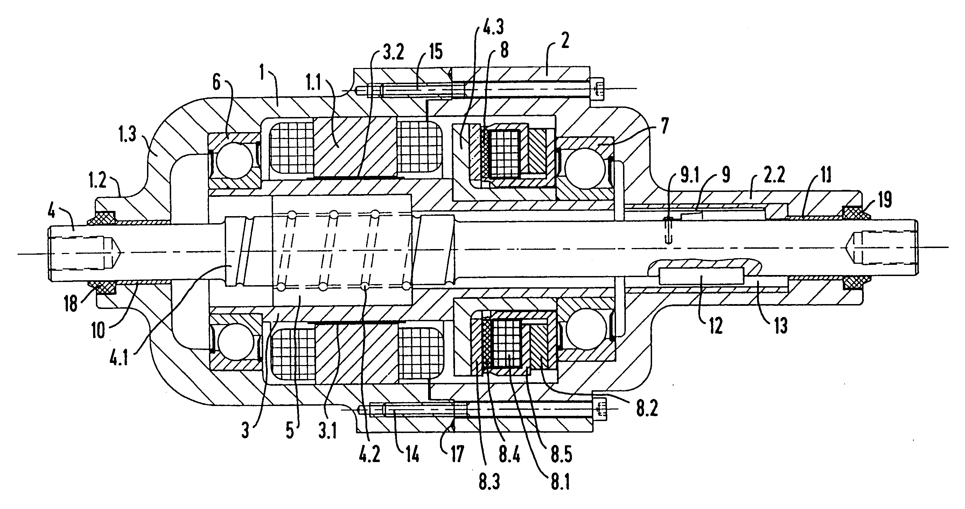

Durch die DE-A1-37 04 412, Fig. 3,4 ist ein Servo-Lenkgetriebe bekannt, bei der eine Verstellstange mit einem Spindelteil von einer im Rotorraum eines Elektro-Servomotors angeordneten Spindelmutter angetrieben wird. Die Spindelmutter ist dabei Bestandteil des bewickelten Rotorpaketes eines statorseitig über Permanentmagnete erregten Servo-Elektromotors. Die axiale Abstützung erfolgt zu Schrägkugellagern über gesonderte Distanzstücke, die axial an dem Rotorpaket und an der Spindelmutter anliegen.

Gemäß Aufgabe vorliegender Erfindung soll ein demgegenüber kompakterer und dabei betriebssicherer Stellantrieb geschaffen werden; die Lösung dieser Aufgabe gelingt bei einem Stellantrieb der eingangs genannten Art durch die Lehre des Anspruchs 1; vorteilhafte Ausgestaltungen der Erfindung sind jeweils Gegenstand der Unteransprüche.

Durch die erfindungsgemäße Anordnung und Halterung der Spindelmutter wird bei für den Einbau in ein Fahrzeug vorteilhafter Kompaktheit die Betriebssicherheit dadurch erhöht, daß die für den Antrieb der Verstellstange verantwortliche Spindelmutter von Verspannungsbeanspruchungen freigehalten und damit im Sinne einer weiteren Verbesserung der Kompaktheit dünnwandiger ausgeführt werden kann.

Eine axial vorgespannte Aufnahme der Hohlwelle kann durch entsprechende Federungseigenschaften des Gehäuses erreicht werden; eine besonders einfache Montage der derart axial vorgespannt aufgenommenen Hohlwelle im Gehäuse gelingt durch ein zweigeteiltes Gehäuse mit zwei axial gegeneinander im Sinne einer axial vorgespannten Aufnahme der Schrägkugellager verspannbaren Gehäusehälften, von denen je eine eines der beiden Schrägkugellager aufnimmt. Nach einer Ausgestaltung der Erfindung ist für eine derartige axial elastische Verspannung der Hohlwelle eine erste bzw. zweite Gehäusehälfte mit integriertem Lagerschild mit je einer Lageraufnahme für die Verstellstange und die Anlage je eines Schrägkugellagers vorgesehen, wobei zumindest ein Lagerschild im Sinne einer axial vorspannbaren Aufnahme eines Schrägkugellagers mit einem entsprechend axial elastisch ausgebildeten Gehäuse-Wandteil versehen ist.

Die Erfindung sowie weitere vorteilhafte Ausgestaltungen der Erfindung werden im folgenden anhand eines schematisch dargestellten Ausführungsbeispiels in der Zeichnung näher erläutert.

Das Ausführungsbeispiel zeigt einen Stellantrieb, der z.B. zum Lenken der Hinterräder eines vier lenkbare Räder aufweisenden Kraftfahrzeuges derart vorgesehen ist, daß an die beiden seitlichen Enden einer Verstellstange 4 Lenkhebel eines rechten bzw. linken Hinterrades ankoppelbar sind.

Die über Gleitlager 10,11 durch Wellendichtungen 18,19 gegen Schmiermittelaustritt bzw. Feuchtigkeitseintritt geschützt in einer Lageraufnahme 1.2 eines ersten Gehäuseteils 1 bzw. in einer Lageraufnahme 2.2 eines zweiten Gehäuseteils 2 axial verschieblich gelagerte Verstellstange 4 weist nach Art eines an sich bekannten Kugelrollspindelantriebs einen Spindelteil 4.1 auf, der über Kugel 4.2 in Antriebsverbindung mit einer Spindelmutter 5 steht, die preßsitzfrei in eine sie umschließende Hohlwelle 3 eingeklebt ist. Die Hohlwelle 3 und die Verstellstange 4 sind in tangentialer Richtung durch eine Paßfeder 12 und eine korrespondierende Längsnut 13 gegen gegenseitiges Verdrehen gesichert.

Der Spindelteil 4.1 der Verstellstange 4 ist axial und radial innerhalb des Rotorraumes eines die Hohlwelle 4 und damit die Spindelmutter 5 antreibenden Elektromotors mit einem bewickelten Statorpaket 1 und mit rotorseitigen, auf dem Außenumfang der Hohlwelle 4 im Luftspaltabstand zum Statorpaket 1.1 befestigten Permanent-Magneten 3.1;3.2 versehen.

Die somit gleichzeitig im Bereich des Elektromotors den Rotortragteil für die Permanent-Magnete 3.1 bzw.3.2 bildende Hohlwelle 4 ist über ein erstes Schrägkugellager 6 im ersten Gehäuseteil 1 und über ein zweites Schrägkugellager 7 im zweiten Gehäuseteil 2 axial vorgespannt gelagert. Dazu liegen die mit ihrem Innenring auf der Hohlwelle 4 fixierten Schrägkugellager 6;7 mit ihren Außenringen axial an integrierten Lagerschilden des ersten Gehäuseteils 1 bzw. des zweiten Gehäuseteils 2 an und ist das erste Gehäuseteil 1 im Bereich seines Lagerschildes mit einem axial elastisch ausgebildeten Gehäuseteil 1.3 derart ausgebildet, daß beim gegenseitigen Verspannen der beiden Gehäusehälften 1;2 durch Stiftschrauben 14;15 die beiden Stirnseiten der Gehäusehälften 1;2 erst nach einem elastischen Verformen des Gehäuse-Wandteils 1.3 im Sinne einer vorgespannten Anlage der Schrägkugellager 6;7 mit ihren gegenüberliegenden Stirnseiten mit Zwischenlage einer umlaufenden Gehäuse-Dichtung 17 zur gegenseitigen Anlage kommen.

Nach einer Ausgestaltung der Erfindung ist im zweiten Gehäuseteil 2 dem Elektromotor eine an sich bekannte elektromagnetische Einscheiben-Bremse 8 mit einer Erregerwicklung 8.1, einem Permanent-Bremsmagneten 8.2, einer über eine Mitnahmescheibe 4.3 an der Hohlwelle 4 im Bereich zwischen dem Elektromotor und dem im zweiten Gehäuseteil 2 fixierten Schrägkugellager 7 befestigten Ankerscheibe 8.3, einem Reibring 8.4 und einem Außenring 8.5 vorgelagert, die bei kleinem Einbauraum eine schnell wirkende und verschleißarme und damit für den hier vorgesehenen Anwendungsfall besonders vorteilhafte Bremsvorrichtung darstellt, die bei Störung der Anlage, z.B. durch Stromausfall, bzw. in der Nullage der Verstellstange 4 diese axial unverschieblich durch selbsttätiges Festbremsen des Rotors des Elektromotors fixiert. Durch elektromagnetische Erregung der Erregerwicklung 8.1 wird in an sich bekannter Weise die Bremse 8 betriebsmäßig in Lösungsstellung mit gelüftetem Reibring 8.4 dadurch gehalten, daß das Feld des Permanent-Bremsmagneten 8.2 durch das elektromagnetische Feld verdrängt wird.

Für eine kompakte Verstellweg-Erfassungsvorrichtung ist nach einer Ausgestaltung der Erfindung ein der elektromagnetischen Bremse 8 axial vorgelagertes statorseitiges Linearpotentiometer 9 mit einem auf der Verstellstange 4 gehaltenen korrespondierenden Schleifkontakt 9.1 vorgesehen, wozu die Lageraufnahme 2.2 der zweiten Gehäusehälfte 2 axial entsprechend verlängert ist.

## Patentansprüche

1. Stellantrieb mit einem Axialgetriebe, insbesondere zum Lenken eines vier lenkbare Räder aufweisenden Fahrzeugs, mit von einem Elektromotor angetriebener Hohlwelle (3), die über eine axial lagegesicherte Spindelmutter (5) an eine konzentrische, axial verschiebliche Verstellstange (4) mit einem korrespondierenden Spindelteil (4.1) gekoppelt ist, gekennzeichnet durch einen Elektromotor mit einem eine statorseitige Wicklung aufnehmenden Statorpaket 1.1 und einem permanenterregten Rotor mit auf dem Außenumfang der Hohlwelle (3) gehaltenen Permanent-Magneten (3.1;3.2) sowie eine im Sinne eines Fügeverbandes preßsitzfreie Halterung der Spindelmutter (5) innerhalb des Rotorraums des Elektromotors an der axial beidseitig durch Schrägkugellager (6;7) im Gehäuse des Stellantriebs abgestützten Hohlwelle (3).

2. Stellantrieb nach Anspruch 1, dadurch gekennzeichnet, daß die Spindelmutter (5) durch eine Klebeverbindung in der Hohlwelle (3) gehalten ist.

3. Stellantrieb nach Anspruch 1 oder 2, gekennzeichnet durch eine axial vorgespannte Halterung der Schrägkugellager (6;7) in dem Gehäuse des Stellantriebes durch entsprechende Federungseigenschaften des Gehäuses.

4. Stellantrieb nach Anspruch 3, gekennzeichnet durch ein zweigeteiltes Gehäuse mit zwei axial gegeneinander im Sinne einer axial vorgespannten Halterung der Schrägkugellager (6;7) verspannbaren, je ein Schrägkugellager aufnehmenden Gehäusehälften (1;2).

5. Stellantrieb nach einem der Ansprüche 1-4, gekennzeichnet durch eine dem Elektromotor axial vorgelagerte elektromagnetische Bremse (8).

6. Stellantrieb nach Anspruch 4 oder 5, gekennzeichnet durch eine erste, den Elektromotor aufnehmende Gehäusehälfte (1) mit einer ersten Lageraufnahme (1.2) für die Verstellstange (4) und eine zweite, die elektromagnetische Bremse (8) aufnehmende Gehäusehälfte (2) mit einer zweiten Lageraufnahme (2.2) für die Verstellstange (4).

7. Stellantrieb nach einem der Ansprüche 1-6, gekennzeichnet durch eine der elektromagnetischen Bremse (8) axial vorgelagerte, vorzugsweise in einer radial kleinbauenden axialen Verlängerung der zweiten Lageraufnahme (2.2) angeordneten, Verstellweg-Erfassungsvorrichtung in Form eines statorseitigen Linearpotentiometers (9) mit einem auf der Verstellstange (4) gehalten korrespondierenden Schleifkontakt (9.1).

8. Stellantrieb nach einem der Ansprüche 4-7, gekennzeichnet durch eine erste bzw. zweite Gehäusehälfte (1 bzw.2) mit integriertem Lagerschild für die Lageraufnahme (1.2 bzw.2.2) der Verstellstange (4) und die Anlage je eines der Schrägkugellager (6;7), wobei zumindest ein Lagerschild im Sinne einer axial vorspannbaren Aufnahme der Schrägkugellager (6;7) mit einem entsprechend axial elastisch ausgebildeten Gehäuse-Wandteil (1.3) versehen ist.

## Claims

1. Actuator with an axial transmission, in particular for steering a vehicle having four steerable wheels, with a hollow shaft (3) which can be driven by an electric motor and is coupled via an axially positionally secured spindle nut (5) to a concentric, axially displaceable adjustment rod (4) with a corresponding spindle component (4.1), characterized by an electric motor with a stator packet (1.1) which has a stator-side winding, and a permanently excited rotor with permanent magnets (3.1; 3.2) secured on the external circumference of the hollow shaft (3), and a mounting of the spindle nut (5), free of force fit in the manner of a joint formation, within the rotor space of the electric motor on the hollow shaft (3) which is supported axially on both sides in the housing of the actuator by angular contact ball-bearings (6; 7).

2. Actuator according to Claim 1, characterized in that the spindle nut (5) is secured in the hollow shaft (3) by means of a bonded connection.

3. Actuator according to Claim 1 or 2, characterized by an axially prestressed mounting of the angular contact ball-bearings (6; 7) in the housing of the actuator by means of appropriate spring properties of the housing.

4. Actuator according to Claim 3, characterized by a two-component housing with two housing halves (1; 2) which can be axially tensioned with respect to one another in the manner of an axially pretensioned mounting of the angular contact ball-bearings (6; 7) and each receive an angular contact ball-bearing.

5. Actuator according to one of Claims 1 to 4, characterized by an electromagnetic brake (8) which is mounted axially in front of the electric motor.

6. Actuator according to Claim 4 or 5, characterized by a first housing half (1) which receives the electric motor and has a first bearing receptacle (1.2) for the adjustment rod (4) and a second housing half (2) which receives the electromagnetic brake (8) and has a second bearing receptacle (2.2) for the adjustment rod (4).

7. Actuator according to one of Claims 1 to 6, characterized by an adjustment path detection device, mounted axially in front of the electromagnetic brake (8) and preferably arranged in a radially small, axial extension of the second bearing receptacle (2.2), in the form of a stator-side linear potentiometer (9) with a corresponding sliding contact (9.1) which is mounted on the adjustment rod (4).

8. Actuator according to one of Claims 1 to 7, characterized by a first and second housing half (1 and 2) with integrated end shield for the bearing receptacle (1.2 and 2.2) of the adjustment rod (4) and the support of one of the angular contact ball-bearings (6; 7) in each case, at least one end shield being provided in the manner of an axially pretensionable receptacle for the angular contact ball-bearings (6; 7) with a housing wall component (1.3) which is of corresponding axially elastic construction.

## Revendications

1. Servomoteur comportant une transmission axiale, notamment pour diriger un véhicule à quatre roues directrices, et un arbre creux (3) entraîné par un moteur électrique et qui est accouplé, par l'intermédiaire d'un écrou de broche (5) bloqué axialement en position, à un élément de broche correspondant (4.1) d'une barre concentrique de réglage (4) déplaçable axialement, caractérisé par un moteur électrique comportant un paquet statorique (1.1) qui loge un enroulement statorique, et un rotor à excitation permanente comportant des aimants permanents (3.1; 3.2), qui sont fixés sur la périphérie extérieure de l'arbre creux (3), ainsi que par un support, sans ajustement serré au sens d'un assemblage en bout, de l'écrou de broche (5) à l'intérieur de l'espace du rotor du moteur électrique, sur l'arbre creux (3) supporté axialement des deux côtés par des roulements à billes à disposition oblique (6; 7) dans le carter du servomoteur.

2. Servomoteur suivant la revendication 1, caractérisé par le fait que l'écrou de broche (5) est retenu dans l'arbre creux (3) par une liaison par collage.

3. Servomoteur suivant la revendication 1 ou 2, caractérisé par un support, avec précontrainte axiale, des roulements à billes à disposition oblique (6;7) dans le carter du servomoteur, au moyen de caractéristiques correspondantes de suspension du carter.

4. Servomoteur suivant la revendication 3, caractérisé par un carter formé de deux moitiés (1;2) qui peuvent être précontraintes axialement l'une contre l'autre dans le sens d'un soutien, avec précontrainte axiale, des roulements à billes à disposition oblique (6;7), et qui logent chacune l'un des roulements.

5. Servomoteur suivant l'une des revendications 1-4, caractérisé par un frein électromagnétique (8) monté axialement en amont du moteur électrique.

6. Servomoteur suivant la revendication 4 ou 5, caractérisé par le fait qu'une première moitié (1) du carter, qui loge le moteur électrique, comporte un premier logement de palier (22) pour la barre de réglage (4), et qu'une seconde moitié (1.2) du carter, qui loge le frein électromagnétique (8) comporte un second logement de palier (2.2) pour la barre de réglage (4).

7. Servomoteur suivant l'une des revendications 1-6, caractérisé par un dispositif de détection de la course de réglage, qui est monté axialement en amont du frein électromagnétique (8), de préférence dans un prolongement axial, de faible étendue radiale, du second logement de palier (2.2), et qui se présente sous la forme d'un potentiomètre linéaire (9) monté sur le stator et équipé d'un contact coulissant correspondant (9.1), maintenu sur la barre de réglage (4).

8. Servomoteur suivant l'une des revendications 4-7, caractérisé par des première et seconde moitiés (1 et 2) du carter comportant un flasque de palier intégré pour le logement de palier (1.2 ou 2.2) de la barre de réglage (4) et l'application respectivement de l'un des roulements à billes à disposition oblique (6; 7), au moins un flasque de palier étant équipé, dans le sens d'un logement, pouvant être précontraint axialement, des roulements à billes à disposition oblique (6; 7), d'un élément de paroi (1.3) agencé de façon correspondante élastiquement de manière à être élastique dans la direction axiale.
